# EUROPEAN PATENT SPECIFICATION

(11) **EP 3 869 173 B1**
(45) Date of publication and mention of the grant of the patent: **28.05.2025**
(21) Application number: 21157777.0
(22) Date of filing: 18.02.2021
(51) Int. Cl.: G01M 1/36

(54) **BALANCING DEVICE FOR ROTATING PARTS**
AUSWUCHTGERÄT FÜR ROTIERENDE TEILE
DISPOSITIF D'EQUILIBRAGE POUR PIECES EN ROTATION

(30) Priority: 20.02.2020 IT 202000003521
(43) Date of publication of application: 25.08.2021
(73) Proprietor: Balance Systems S.r.L., 20145 Milano (IT)
(72) Inventor: TRIONFETTI, Gianni, 20041 Agrate Brianza (Monza Brianza) (IT)
(74) Representative: Lunati & Mazzoni S.r.L.

(56) References cited:
- EP-A2- 1 424 545
- WO-A1-96/17294
- US-A- 5 688 160

## Description

The present invention relates to a balancing device for rotating parts of the type specified in the preamble of the first claim.

Various types of balancing devices of workpieces are currently known.

In particular, on board of rotating devices, such as machine tools or other machinery, there are balancing devices capable of constantly maintaining the center of mass of the rotating portion in the selected position. Generally, said center of mass of the rotating portion is kept in correspondence with the rotation axis, so that unwanted centrifugal forces are not created.

Said balancing devices are generally inserted in balancing apparatuses which also include imbalance measuring means, capable of verifying and measuring the presence of an imbalance.

The imbalance is consequently regulated and canceled, or reduced to the maximum, by the said balancing device, constrained to the rotating portion.

The latter comprises two non-balanced masses, with respect to the rotation axis of the rotating piece, and therefore each comprising a conveniently identical imbalance, or rather of the same mass. The balancing device also comprises two motors, one for each mass, suitable for rotating the said masses around the rotation axis itself.

The portion of the non-balanced masses affects the center of mass of the rotating portion.

In fact, if the same masses are opposite, offset at 180° with respect to the rotation axis, their imbalances cancel each other out and the balancing device does not change the position of the center of mass of the assembly consisting of the rotating portion and the balancing device.

On the contrary, if the masses are not opposite, their imbalances do not cancel each other out and the balancing device generates an imbalance. Said imbalance at the same time is suitably made equal and opposite to the imbalance of the rotating portion, so that the position of the center of mass of the assembly consisting of the rotating portion and the balancing device is modified and is positioned along the rotation axis or as close to it as possible.

The said masses are generally moved, with respect to the rotating piece and to modify the portion of the center of mass, by means of electric motors and mechanical connections. As described for example in patent application EP-A-2717032 by the same applicant or in patent application US-A-5688160.

Patent applications US-A-17886005 and WO-A-96/17294 instead show masses moved directly from the fixed portion.

Patent application EP-A-19158944, by the same applicant, shows balancing masses moved by motors inside the masses themselves.

Patent application EP-A-13156332, by the same applicant, shows handled balancing masses consisting of wires or tapes that can be rolled-up around coils placed in eccentric positions with respect to the rotation axis, so that the winding and unwinding around a different coils result in mass transfer and a change in the center of mass of the balancing device.

The known technique described includes some drawbacks.

In particular, said devices are very complex and therefore could be subject to problems if not constantly revised.

The complexity and the problems are further accentuated by the considerable forces at play. In fact, said rotating pieces can reach speeds of the order of magnitude of tens of thousands of revolutions per minute.

Furthermore, in the patent application US-A-17886005 the motors which move the eccentric masses are always active, even when the masses must not be moved, with respect to the rotating piece. Consequently, the device can entail considerable problems, in particular if the rotation speeds of the rotating piece are high.

In this situation, the technical task underlying the present invention is to devise a balancing device capable of substantially obviating at least part of the aforementioned drawbacks.

Within the scope of said technical task it is an important object of the invention to obtain a precise balancing device.

The technical task and the specified aims are achieved by a balancing procedure as claimed in the annexed claim 1.

Preferred technical solutions are highlighted in the dependent claims.

The features and advantages of the invention are clarified below by the detailed description of preferred embodiments of the invention, with reference to the accompanying figures, in which:

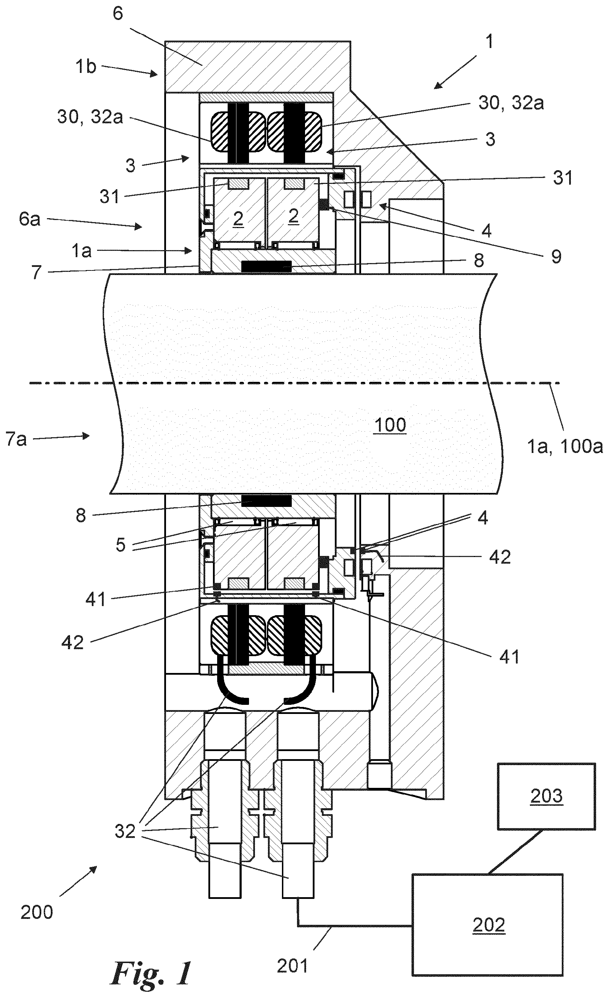

Fig. **1** shows a section of the device on which the procedure according to the invention is carried out.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the balancing device is globally indicated with the number **1.**

It is conveniently part of a balancing apparatus **200,** described below.

The balancing device 1 defines a central axis **1a** and, in use, is at least partially constrained to a rotating part **100.**

Said rotating part 100 is preferably constituted by the rotor of a machine tool or by other devices and defines a rotation axis **100a.**

The balancing device 1 is preferably connectable to the rotating part 100, so that the central axis 1a substantially coincides with the rotation axis 100a. It has the purpose of eliminating the imbalances of the system comprising the balancing device 1 itself and the rotating part 100. Such imbalances are eliminated when the center of mass of the balancing device 1 system and the rotating part 100 lies along the axis of rotation 100a.

The balancing device 1 preferably comprises at least one eccentric mass **2,** and more preferably two eccentric masses 2, each independently rotatable about the central axis 1a and not balanced with respect to the same central axis 1a.

The eccentric masses 2 are for example constituted by two annular elements, with axis along the central axis 1a, having asymmetrically discharged or weighted portions or the like.

The balancing device 1 preferably also comprises at least one balancing motor **3,** preferably one for each mass 2, more preferably two motors 3, each capable of rotating an eccentric mass 2, with respect to the rotating part 100 around the central axis 1a. The motor 3 is also capable of rotating the eccentric mass 2 with respect to the remaining part of the balancing device 1.

The balancing motor 3 is preferably an electric motor, more preferably three-phase, with permanent magnets, also called a brushless motor and per se known to the person skilled in the art. It is a direct current electric motor (BLDCM, Brushless Direct Current Motor) having a permanent magnet rotor.

Each balancing motor 3 preferably comprising a stator **30** and a rotor **31,** and, preferably, the rotor 31 is integral with an eccentric mass 2.

More in detail, the rotor 31 comprises permanent magnets, preferably present in a number of pairs of magnets with different poles preferably greater than 1.

Said magnets are preferably arranged in the outer portion of the rotor 31.

The stator 30 preferably comprises electromagnetic windings, such as coils and the like, distributed or concentrated, known per se. It is preferably external to the rotor 31. The number of electromagnetic windings is suitably defined on the basis of the pairs of permanent magnets present on the rotor.

Preferably, the stator 30 is fixed and does not rotate with said rotating part 100. For example, it is fixed to the ground or to other supports and does not rotate during the rotation of the part 100.

In a different example, however, the stator 30 is integral with the rotating part 100. The rotor 31, on the other hand, is always integral with the rotating part 100 except for the moments in which the position of the eccentric masses 2 must vary in order to balance the rotating part 100.

The stator 30 also comprises electrical connections **32** between the electromagnetic windings 30a (for example in distributed or concentrated configuration) and a source of electrical energy, preferably alternating, more preferably three-phase.

The balancing device 1 also comprises first detection means **4** of the angular position of the overall rotor and preferably also second detection means **41** for each rotating mass 2, preferably with respect to the stator 30. They are known per se and consist for example of Hall effect sensors or by an encoder per se known to the person skilled in the art or similar. For example, if Hall effect sensors are used: a first and a second Hall sensor are positioned respectively in correspondence with each stator 30 and each are capable of detecting a corresponding magnet or other suitable reference placed on the rotor 31 or on the masses 2. A third Hall sensor, always integral with the stator body (or suitably available on the stator of the whole system including the host machinery) is capable of detecting a corresponding magnet or other appropriate reference that rotates integral with the axis 1a or 100. They also include suitable electrical connections **42.**

The balancing device 1 also preferably comprises rotational bearings **5,** around the central axis 1a, capable of connecting the eccentric mass 2, each with an independent bearing 5, with the rotating part 100 or with portions integral with it. The balancing device 1 therefore defines a stator portion **1b**. Said stator portion 1b preferably comprises the stator 30, the electric connections 32, part of the fixed detection means 4, 41, relative connections 42 and a first casing **6,** suitable for enclosing the elements forming the stator portion 1b. The first casing 6 is preferably provided with a central seat **6a,** hollow and preferably cylindrical or cylindrical sector. The balancing device 1 also defines a rotor portion 1c. It preferably comprises the rotor 31, the eccentric masses 2, the rotational bearings 5, part of the movable detection means 4, 41, and relative connections and a second casing **7,** capable of containing the said elements. The second casing 7 is preferably inserted, in use, inside the central seat 6a, which is hollow and preferably cylindrical or cylindrical sector.

The casing 7 preferably has the task of making the entire rotor assembly airtight and protected.

Preferably there is no direct contact between the portions 6 and 7 but an air cushion, preferably a few tenths of a millimeter. It can also comprise a second seat **7a** for a portion of the rotating part 100.

The balancing device 1 also preferably comprises locking means **9,** capable of locking, preferably by friction, the two eccentric masses 2 when not stressed by the motors 3. Preferably they act in the axial direction 1a. They can be constituted by one or more thrust elements acting in an axial direction or similar, or made with magnetic elements.

The balancing device 1 also preferably comprises detection means of the imbalance **203,** preferably consisting of piezoelectric elements known per se. They are preferably placed inside the device 1 and can be integral with the casing 6.

The balancing device 1 also preferably comprises a contact sensor **8** of the rotating part 100 with a part being processed, especially if the part in rotation is a tool such as a grinding wheel or similar.

The balancing device 1 also preferably comprises a sensor 4 for detecting the position or proximity sensor between the rotor and the stator.

The balancing apparatus 200 therefore comprises said balancing device 1 and, preferably, electrical power supply means **201,** connected to said electric connections 32 and 42 and data connection means of the wired or wireless type. It also preferably comprises control means **202,** capable of receiving information, transmitting it and controlling the motors 3.

The operation of the balancing device 1, and of the balancing apparatus 200, previously described in structural terms, is as follows.

It defines a new balancing procedure.

In detail, the rotor portion 1c, in particular by means of the second casing 7, is rigidly constrained to a shaft of the rotating part 100, so that the central axis 1a substantially coincides with the rotation axis 100a.

The rotor portion 1c is also inserted in the central seat 6a of the first casing 6, and therefore in functional connection with the stator portion 1b and the proximity sensor system perceives the correct positioning of the elements.

When the rotating part 100 is initiated, the locking means **9** keep the eccentric masses 2 fixed with respect to the rotor 31 and the rotating part 100. The masses 2 and the rotor 31 are therefore dragged by the rotating psrt 100 and therefore have the same rotation speed as the latter.

Initially, for example if the rotating part is balanced, the two eccentric masses 2 are offset by 180°, so that the balancing device 1 is also balanced and also the whole of the two objects. Or the masses 2 are in the starting position in which they keep the part 100 balanced.

If an imbalance occurs in the rotating piece 100, the imbalance detection means 203 perceives it, measures it and sends it to the control means 202. The latter, preferably, knowing the position of the eccentric masses 2, by means of the detection means 4, 41, and the position and extent of the imbalance, by the imbalance detection means 203, calculate the position that the eccentric masses 2 must assume and the direction and angle of rotation, around the central axis 1a, which must implement the masses 2, to balance the assembly consisting of the rotating part 100 and the device 1.

To move the eccentric masses 2, the control means 202 acquire, by the first detection means 4, the speed of the rotor 31 and control, obtaining for example a vector control, at or to the eccentric mass 2 a speed, with respect to the stator 30, slightly higher or lower than this speed of the rotor 31, so that the eccentric mass 2 is based of an angular distance equal to a maximum of half a turn with respect to the rest of the rotor 31. This speed is controlled by selecting the respective alternation of electrical power supply to the electromagnetic windings of the stator 30.

Basically, the control means 202 control the power supply means 201 and, through the electric connections 32, the balancing motors 3 of one or both of the eccentric masses 2 arranging them, with respect to the position of the rest of the rotor 31, in the required position, or rather, preferably, until the imbalance of the balancing device 1 is not equal and opposite to the imbalance of the part 100, in such a way as to balance it. Once the ideal position has been reached, the electric control is switched off.

The eccentric masses 2, following this movement, remain blocked by the locking means **9** and continue to be dragged with the rotor 31 by the rotating part 100.

The balancing device 1 according to the invention achieves important advantages. In fact, the balancing device is simple and robust, since the motors are of the brushless type and therefore not subject to wear. It can therefore also be arranged on board rotating members that exceed tens of thousands of revolutions per minute. For the same reasons it is also economical.

The device 1 itself is also very precise, since it can move the masses of submicrometric fractions.

The two masses can also be moved in both directions, since they can assume a selected speed.

The invention is susceptible of variants falling within the scope of the inventive concept defined by the claims.

## Claims

1. A balancing procedure, carried out on a balancing device (1) for a rotating part (100),
- said rotating part (100) defining a rotation axis (100a),
- said balancing device (1) defining a central axis (1a) and being able to be bound, at least partially, to said rotating part (100) so that said central axis (1a) basically coincides with said rotation axis (100a), and comprising:
- at least one eccentric mass (2) that can be rotated about said central axis (1a) and that is not balanced in relation to said central axis (1a),
- at least one balancing motor (3), designed to rotate said eccentric mass (2), in relation to said rotating part (100) around said central axis (1a), wherein,
- said balancing motor (3) is an electric motor with permanent magnets comprising a stator (30) and a rotor (31),
- said rotor (31) is integral with said eccentric mass (2),
- said rotor (31) is driven and dragged by said rotating part (100) when no balancing operation is required for said rotating part (100),
**characterized in that** said electric motor is a brushless electric motor.

2. The balancing procedure according to the previous claim, wherein, for balancing, the position that said eccentric masses (2) must assume and the direction and angle of rotation, around said central axis (1a), which said masses (2) must assume to balance the assembly, consisting of said rotating part (100) and said balancing device (1), is calculated, and said eccentric mass (2) is, therefore, moved acquiring the speed of said rotor (31) and driving said eccentric mass (2) at a speed, in relation to said stator (30), higher or lower than the speed of said rotor (31), in such a way that said eccentric mass (2) is displaced by a calculated angular distance.

3. The balancing procedure according to claim 1 or 2, wherein said stator (30) is fixed and does not rotate with said rotating part (100).

4. The balancing procedure according to claim 1 or 2, wherein said stator (30) is integral with said rotating part (100).

5. The balancing procedure according to any of the previous claims, wherein said rotor (31) comprises permanent magnets.

6. The balancing procedure according to any of the previous claims, wherein said balancing device (1) comprises detection means (4, 41) for detecting the angular position of the rotor (30).

7. The balancing procedure according to the previous claim, wherein said detection means (4, 41) comprise Hall effect sensors.

8. The balancing procedure according to any of the previous claims, wherein said balancing device (1) comprises means for detecting an imbalance (203).

## Patentansprüche

1. Auswuchtverfahren, das an einer Auswuchtvorrichtung (1) für ein Drehteil (100) durchgeführt wird,
- wobei das Drehteil (100) eine Rotationsachse (100a) definiert,
- wobei die Auswuchtvorrichtung (1) eine Zentralachse (1a) definiert und in der Lage ist, zumindest teilweise mit dem Drehteil (100) verbunden zu werden, sodass die Zentralachse (1a) im Wesentlichen mit der Rotationsachse (100a) zusammenfällt, und umfassend:
- mindestens eine Exzentermasse (2), die um die Zentralachse (1a) gedreht werden kann und in Bezug auf die Zentralachse (1a) nicht ausgewuchtet wird,
- mindestens einen Auswuchtmotor (3), der dazu ausgelegt ist, die Exzentermasse (2) in Bezug auf das Drehteil (100) um die zentrale Achse (1a) zu drehen,
wobei,
- der Auswuchtmotor (3) ein Elektromotor mit Permanentmagneten umfassend einen Stator (30) und einen Rotor (31) ist,
- wobei der Rotor (31) einstückig mit der Exzentermasse (2) ausgebildet ist,
- wobei der Rotor (31) durch das Drehteil (100) angetrieben und mitgezogen wird, wenn kein Auswuchtvorgang für das Drehteil (100) erforderlich ist,
**dadurch gekennzeichnet, dass** der Elektromotor ein bürstenloser Elektromotor ist.

2. **.** Auswuchtverfahren nach dem vorhergehenden Anspruch, wobei, zum Auswuchten, die Position, die die Exzentermassen (2) einnehmen müssen, sowie die Richtung und der Drehwinkel, um die zentrale Achse (1a), die die Massen (2) einnehmen müssen, um die Gruppe bestehend aus dem Drehteil (100) und der Auswuchtvorrichtung (1) auszuwuchten, berechnet werden, und die Exzentermasse (2) dementsprechend bewegt wird, indem sie die Geschwindigkeit des Rotors (31) aufnimmt und die Exzentermasse (2) mit einer Geschwindigkeit in Bezug auf den Stator (30) antreibt, die höher oder niedriger als die Geschwindigkeit des Rotors (31) ist, sodass die Exzentermasse (2) um einen berechneten Winkelabstand verschoben wird

3. **.** Auswuchtverfahren nach Anspruch 1 oder 2, wobei der Stator (30) fest ist und sich nicht mit dem Drehteil (100) dreht.

4. **.** Auswuchtverfahren nach Anspruch 1 oder 2, wobei der Stator (30) einstückig mit dem Drehteil (100) ausgebildet ist.

5. **.** Auswuchtverfahren nach einem der vorhergehenden Ansprüche, wobei der Rotor (31) Permanentmagneten umfasst.

6. **.** Auswuchtverfahren nach einem der vorhergehenden Ansprüche,
wobei die Auswuchtvorrichtung (1) Erkennungsmittel (4, 41) zum Erkennen der Winkelposition des Rotors (30) umfasst.

7. **.** Auswuchtverfahren nach dem vorhergehenden Anspruch, wobei die Erkennungsmittel (4, 41) Hall-Effekt-Sensoren umfassen.

8. **.** Auswuchtverfahren nach einem der vorhergehenden Ansprüche,
wobei die Auswuchtvorrichtung (1) Mittel zum Erkennen eines Ungleichgewichts (203) umfasst.

## Revendications

1. Procédé d'équilibrage, mis en œuvre sur un dispositif d'équilibrage (1) pour une pièce tournante (100),
ladite pièce tournante (100) définissant un axe de rotation (100a),
ledit dispositif d'équilibrage (1) définissant un axe central (1a) et étant apte à être lié, au moins partiellement, à ladite pièce tournante (100) de sorte que ledit axe central (1a) coïncide essentiellement avec ledit axe de rotation (100a), et comprenant :
au moins une masse excentrée (2) pouvant tourner autour dudit axe central (1a) et qui n'est pas équilibrée par rapport audit axe central (1a)
au moins un moteur d'équilibrage (3), conçu pour faire tourner ladite masse excentrée (2),
par rapport à ladite pièce tournante (100) autour dudit axe central (1a), dans lequel,
ledit moteur d'équilibrage (3) est un moteur électrique à aimants permanents comprenant un stator (30) et un rotor (31),
ledit rotor (31) est solidaire de ladite masse excentrée (2),
ledit rotor (31) est entraîné et tracté par ladite pièce tournante (100) lorsqu'aucune opération d'équilibrage n'est requise pour ladite pièce tournante (100),
**caractérisé en ce que** ledit moteur électrique est un moteur électrique sans balais.

2. Procédé d'équilibrage selon la revendication précédente, dans lequel, pour l'équilibrage, la position que doivent assumer lesdites masses excentrées (2) ainsi que la direction et l'angle de rotation, autour dudit axe central (1a), que doivent assumer lesdites masses (2) pour équilibrer l'ensemble, constitué de ladite pièce tournante (100) et dudit dispositif d'équilibrage (1), est calculée, et ladite masse excentrée (2) est, par conséquent, déplacée en acquérant la vitesse dudit rotor (31) et en entraînant ladite masse excentrée (2) à une vitesse, par rapport audit stator (30), supérieure ou inférieure à la vitesse dudit rotor (31), de telle sorte que ladite masse excentrée (2) soit déplacée d'une distance angulaire calculée.

3. Procédé d'équilibrage selon la revendication 1 ou 2, dans lequel ledit stator (30) est fixe et ne tourne pas avec ladite pièce tournante (100).

4. Procédé d'équilibrage selon la revendication 1 ou 2, dans lequel ledit stator (30) est solidaire de ladite pièce tournante (100).

5. Procédé d'équilibrage selon l'une quelconque des revendications précédentes, dans lequel ledit rotor (31) comprend des aimants permanents.

6. Procédé d'équilibrage selon l'une quelconque des revendications précédentes, dans lequel ledit dispositif d'équilibrage (1) comprend des moyens de détection (4, 41) pour détecter la position angulaire du rotor (30).

7. Procédé d'équilibrage selon la revendication précédente, dans lequel lesdits moyens de détection (4, 41) comprennent des capteurs à effet Hall.

8. Procédé d'équilibrage selon l'une quelconque des revendications précédentes, dans lequel ledit dispositif d'équilibrage (1) comprend des moyens de détection d'un déséquilibre (203).
